# EUROPEAN PATENT SPECIFICATION

(11) **EP 1 293 044 B1**
(45) Date of publication and mention of the grant of the patent: **22.07.2009**
(21) Application number: 01934794.7
(22) Date of filing: 29.05.2001
(51) Int. Cl.: H04B 1/10

(54) **DEVICE AND METHOD FOR IMPROVED FILTERING IN A RADIO RECEIVER IN THE MICROWAVE RANGE**
EINRICHTUNG UND VERFAHREN ZUR VERBESSERTEN FILTERUNG IN EINEM FUNKEMPFÄNGER IM MIKROWELLENBEREICH
DISPOSITIF ET PROCEDE PERMETTANT D'AMELIORER LE FILTRAGE D'UN RECEPTEUR RADIO DANS LA PLAGE MICRO-ONDES

(30) Priority: 30.05.2000 SE 0002008
(43) Date of publication of application: 19.03.2003
(73) Proprietor: TELEFONAKTIEBOLAGET LM ERICSSON (publ), 164 83 Stockholm (SE)
(72) Inventor: SNYGG, Göran, S-433 43 Partille (SE); CARLSSON, Erik, S-431 39 Mölndal (SE)
(74) Representative: Andersson, Per Rune
(86) International application number: PCT/SE2001/001189
(87) International publication number: WO 2001/093438

(56) References cited:
- EP-A2- 0 441 500
- US-A- 5 148 413
- US-A- 5 226 057
- US-A- 5 307 517

## Description

### TECHNICAL FIELD

This invention relates to a device and a method for achieving, by means of improved filtering, an improved signal to noise ratio in a radio receiver, particularly in the microwave range. The invention can also be used to achieve increased flexibility in a system for communication in the microwave range.

### CURRENT TECHNOLOGY

Interference signals can often be a problem in wireless telecommunication systems, as they have an adverse effect on the signal to noise ratio. The interference signals can be intentional or unintentional, and can originate, for example, from adjacent systems operating at the same frequency range. In line with the development of mobile telephony and other types of wireless communication in the microwave range, the likelihood of receiving interference signals in systems operating at these frequencies will increase, which in turn increases the need to be able effectively to provide protection against or to eliminate interference signals received.

Conventional transmitting devices for reception in wireless telecommunication in the microwave range usually comprise an antenna connected to a receiver, with receiving devices comprising a bandpass filter between the receiver and the antenna. The function of the bandpass filter is to filter out signals that lie outside the frequency range at which the device in question can operate, which means that transmitted or received interference signals that lie within the frequency range at which the device operates cannot be eliminated by the bandpass filter. Received interference signals can therefore degrade the signal to noise ratio.

In the receiver the received signal is usually converted down to lower frequencies, and, in order to be able to improve the signal to noise ratio in a signal that has been affected by interference signals, to date there have been various types of signal processing of the signal that comes out of the receiver, in other words the converted signal.

As the signal processing is carried out on the signal that comes out of the receiver, there is a limit to how much the signal to noise ratio can be improved by the signal processing, due to the fact that the interference signal has already passed through the receiver and thus can be present in the converted signal.

In other words, there is a need to be able to improve the signal to noise ratio In a device operating in the microwave range, in a better way than was previously available.

### DESCRIPTION OF THE INVENTION

The problem that is solved by the current invention Is a better way than was previously available of being able to improve the signal to noise ratio in a system for radio communication in the microwave range.

The problem is solved by providing a system for radio communication in the microwave range as in claim 1. It comprises a transmitting device and a receiving device, the transmitting device comprising a transmitter, an antenna, a filter with variable filter characteristics, and a device for controlling the variable filter.
The receiving device comprises a receiver, an antenna, a filter with variable filter characteristics, and a device for controlling the variable filter.

The filters are arranged between the antenna and the transmitter, and the antenna and the receiver, respectively, and have variable filter characteristics, with each of the devices for controlling the respective filters being responsive to control signals from an external source, whereby the frequency range at which the respective device and thereby the whole system operates can be controlled during operation. This enables the system to adaptively, during operation, change its frequency range in response to undesired signals which interfere with the communications of the system.

The external source for control signals for the device for controlling the variable filter in the transmitting device is the device for controlling the variable filter in the receiving device and vice versa, whereby the two control devices are In communication with each other, enabling the system to change frequency range rapidly and easily in response to jamming or interference.

The variable filter is suitably either a bandpass or a notch filter, which means that it can be used to eliminate interference signals without significantly impairing the received useful signal.

The document EP 0441500 discloses a transceiver for a cellular phone comprising a transmitter and a receiver coupled to a common antenna by a duplex filter. A notch filter is connected between the output of an amplifier and the remainder of the receiver, the notch filter being tune to attenuate frequencies comprising a transmit frequency.

The document US 5307517 discloses an FM interference cancellation system comprising an adaptive notch filter for removing undesired co-channel FM interference.

### DESCRIPTION OF THE FIGURES

In the following, the invention will be described in greater detail utilizing examples of preferred embodiments and with reference to the attached figures, in which:
Figure 1 shows a principle underlying the invention, and
Figure 2 shows a communication system and a source of interference, and
Figure 3 shows a device according to the invention, and
Figure 4 shows filter characteristics for two different filters that can be Incorporated in a device according to the invention, and
Figure 5 shows a system according to a variant of the invention, and
Figure 6 shows filter characteristics for filters from Figure 5.

### EMBODIMENTS

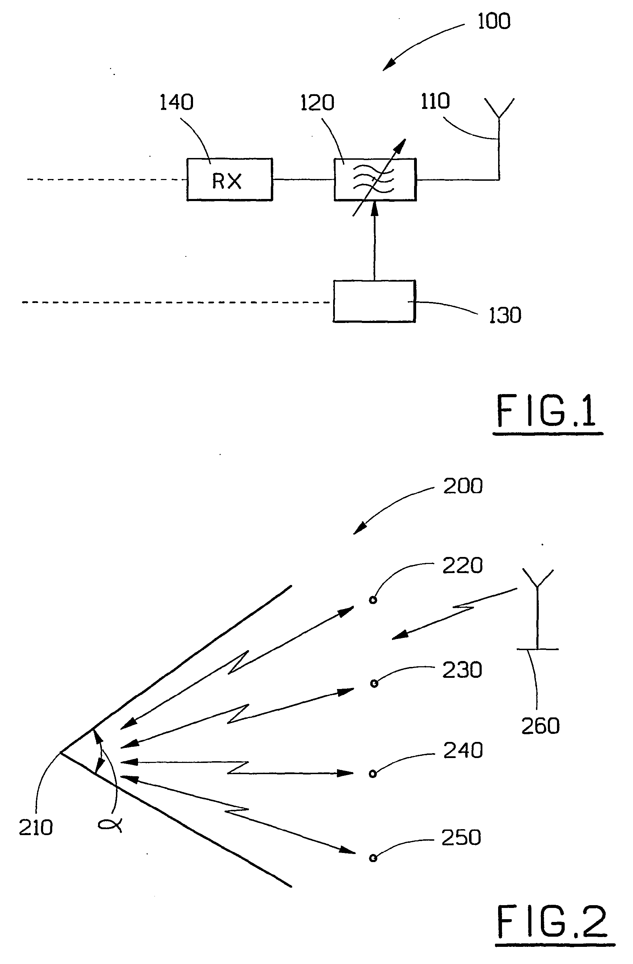

Figure 1 shows a principle underlying the invention: In a device 100 In the microwave range an antenna 110 is used to receive electromagnetic signals.
The device comprises in addition a receiver 140, and variable filter 120 which is connected between the antenna and the receiver. In order to be able to control the variable filter, the device comprises in addition a means 130 for controlling the variable filter.

The fact that the variable filter 120 is arranged so that the signal received by the antenna 110 passes through the filter before it reaches the receiver 140 means that the filter can be used to adapt the signal that reaches the receiver. The means 130 for controlling the variable filter can be arranged in a number of different ways, which will be described later, as will the filter 120.

Figure 2 shows schematically a communication system 200 in which the invention can be used, a so-called point-to-multipoint system. A central radio station 210 is used to communicate with a number of other radio stations 220,230,240,250 within a certain sector. The central radio station covers the whole sector with its antenna, an area with an angle α, normally approximately 90 degrees, while the antenna of each of the stations with which it communicates only covers a fairly narrow sector.

In addition to the stations that are part of the system, there is also another radio station 260 In the vicinity that transmits at the same frequency range as the system 200 within the sector that is covered by the system, which means that these transmissions are received by the central radio station 210. In traditional systems there are two different possible ways of solving the problem of the received interference signals. The first of these is to change the frequencies at which the units 210-250 In the system communicate, which is an expensive measure that may possibly not be permissible if the operator does not have a licence to transit on other frequencies. The other measure that has been able to be used to date is to signal process the signal that comes out of the receiver in the respective units 210-250 and that thus is already combined with the interference signal.

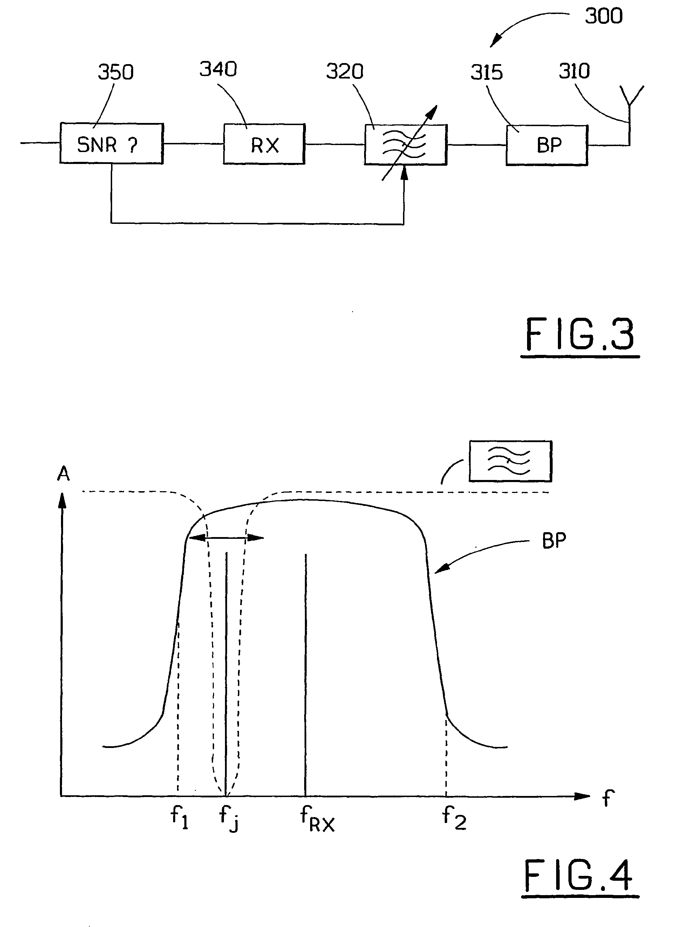

Figure 3 shows a device 300 according to prior art . The device 300 comprises a receiver 340, an antenna 310, a filter 320 with variable filter characteristics and a means 350 for controlling the variable fitter. The variable filter 320 is arranged between the antenna 310 and the receiver 340, which means that it can be used to reduce or completely eliminate interference signals before these have even reached the receiver, which provides improved opportunities for obtaining a good signal to noise ratio. The device 300 comprises in addition a bandpass filter 315, the function of which is to suppress or eliminate signals outside the frequency range at which the device operates. The bandpass filter 315 is suitably arranged between the receiver 340 and the antenna 310.

The variable filter 320 is suitably a notch filter, in other words a filter with a very narrow suppressed frequency band. This filter characteristic and the fact that the filter 320 is variable means that the suppressed frequency band can be controlled so that it eliminates interference signals that arise practically anywhere within the frequency range at which the device 300 operates. For this purpose, the device also comprises a means 350 for controlling the variable filter 320 so that its suppressed frequency band is optimal with regard to the received interference signal.

In order that the control of the filter 320 is carried out in the best way, the means 350 for controlling the filter can, for example, comprise a device that measures the signal to noise ratio (SNR) in the signal after the receiver 340. If the SNR after the receiver drops below a certain predetermined level, the filter's suppressed frequency band is controlled so that it sweeps across the whole operating range of the receiver. The values of SNR for different positions on the suppressed frequency band are compared, for example by being stored in a table, and the position of the middle frequency of the suppressed frequency band that gives the best SNR is used. If no interference signal is present, the notch filter can be controlled so that its suppressed frequency band is as far from the useful signal as possible.

Figure 4 shows schematically the filter characteristics of two filters that are found in the device 300 in Figure 3, the bandpass filter (BP) and the variable notch filter. The bandpass filter is used to remove interference signals outside an operating range, f₁-f₂, for the device. The figure shows a received useful signal f_{RX} and a received interference signal fⱼ. As the interference signal lies within the operating range, the bandpass filter will not be able to suppress it. The notch filter, with its narrow suppressed frequency band, has been controlled so that the suppressed frequency band is centred around the interference frequency fⱼ, which means that the effect of the interference frequency is reduced considerably, whereby the desired effect of the invention is achieved, namely that the signal that reaches the receiver is "clean".

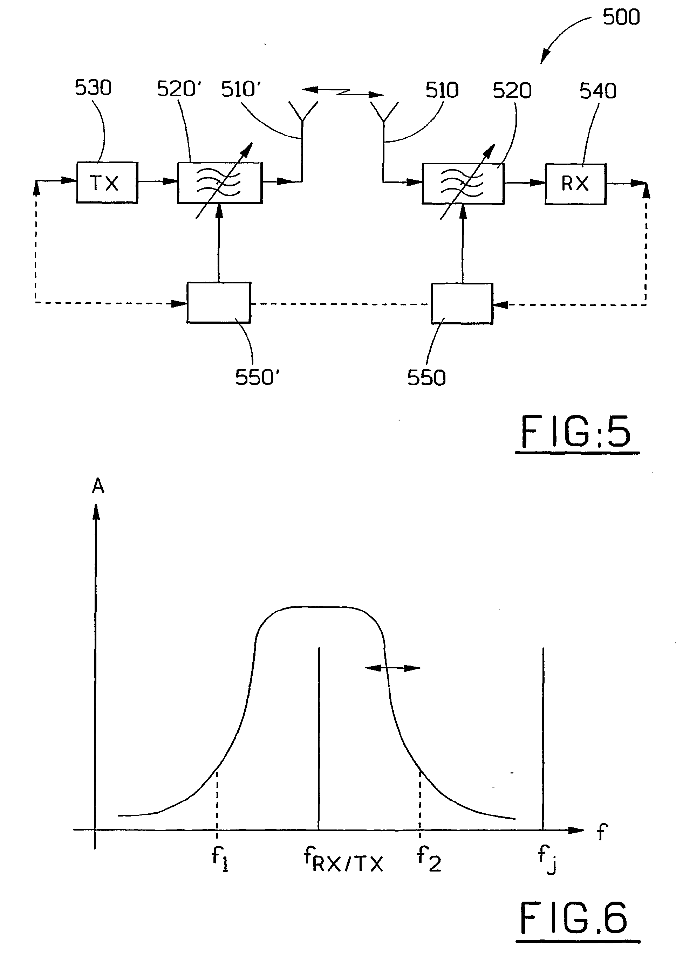

Figure 5 shows a variant of the invention, in a system 500 for radio communication in the microwave range. The system 500 comprises a transmitting device and a receiving device, where the transmitting device comprises a transmitter 530, an antenna 510', a filter 520' with variable filter characteristics, and a device 550' for controlling the variable filter 520', and the receiving device comprises a receiver 540, an antenna 510, a filter 520 with variable filter characteristics, and a device 550 for controlling the variable filter 520.

In a similar way to that described above, the variable filters 520, 520' are arranged between the antennas 510, 510' and the receiver 540 and transmitter 530 respectively, which means that the variable filters can be controlled in such a way that the frequency range at which the respective device and thereby the whole system 500 operates can be controlled during operation.

Unlike the device that has been described above, in this variant of the invention the variable filter 520, 520' in the respective device can be a notch filter, but is preferably a bandpass filter, whose function is to suppress spurious signals in the transmitting device with its passband, and to "cut out" only the frequency range that it is wished to receive in the receiving device. This is shown schematically in Figure 6, where a pass band that extends between the frequencies f₁ and f₂ is shown, and can be moved to avoid the effect of an interference signal fⱼ. The passband has been centred around the transmitting link's frequency f_{TX}, which consequently corresponds to the receiving link's frequency f_{RX}.

In order to change the transmission/reception frequency, it has been necessary in previous devices either to change the filters in the transmitting/receiving device, or to change the whole device. With a variable filter according to the invention, the frequencies can be changed on site, or by remote control, whereby a number of advantages are obtained:
- Changes to frequency planning are made considerably easier, as the changes can be carried out on site, without replacing hardware.
- The frequency at which the device is to operate can be determined on site, which means that an operator can purchase and stock a "standard device", instead of a great many different devices for different frequencies.
- If it is noticed that the system is receiving (or transmitting) interference frequencies, the transmission/reception frequency can easily be changed.

The transmitting and receiving devices must, of course, both change frequency in the event of a frequency change, which means that they need to be "co-ordinated". When changing frequency planning, this can be carried out by the means 550, 550' in each device for controlling its variable filter being responsive to control signals from an external source, such as, for example, a central control device, and in this way being commanded to change the middle frequency of its pass band. Alternatively, one device can signal to the other, suitably via a separate signal channel, that it wants to change frequency, and the frequency change is then implemented.

If the frequency change is carried out in order to eliminate the transmission or reception of interference signals, it can also be possible to have a method where the devices test a number of transmission/reception frequencies in order to find out which provides the best result.

The receiving and/or transmitting devices in the system 500 can, of course, be supplemented in such a way that they also comprise a variable notch filter connected between the antennas 510, 510' and the transmitter 520 or receiver 530 respectively.

## Claims

1. A system (500) for radio communication in the microwave range, comprising a transmitting device and a receiving device, said transmitting device comprising a transmitter (530), a transmitting antenna (510'), a transmission filter (520') with variable filter characteristics, and a device (550') for controlling the variable transmission filter (520'), and said receiving device comprising a receiver (540), a receiving antenna (510), a reception filter (520) with variable filter characteristics, and a device (550) for controlling the variable reception filter (520), the system being
**characterized in that**
- the transmission and reception filters (520,520') are arranged between the transmitting antenna and the transmitter and the receiving antenna and the receiver, respectively,
- each of said devices (550,550') for controlling the respective transmission and reception filters are responsive to control signals from an external source, wherein the external source for control signals for the device for controlling the variable transmission filter (520') is the device (550) for controlling the variable reception filter (520) and vice versa, whereby the two control devices are in communication with each other,
whereby the frequency range at which the respective device and thereby the whole system (500) operates can be controlled during operation.

2. A system (500) according to claim 1, in which the external source for control signals for the device for controlling the variable filter (520',520) in the transmitting device and in the receiving device is a central control device.

3. A system according to any of claims 1 or 2, in which the variable filters (520',520) in the transmitting device and in the receiving device are bandpass filters.

4. A system according to any of claims 1 or 2, in which the variable filters (520',520) in the transmitting device and in the receiving device are notch filters.

5. A method for use in a system (500) for radio communication in the microwave range, the system having a transmitting device and a receiving device, said transmitting device comprising a transmitter (530), a transmitting antenna (510'), a transmission filter (520') with variable filter characteristics, and a device (550') for controlling the variable transmission filter (520'), and said receiving device comprising a receiver (540), a receiving antenna (510), a reception filter (520) with variable filter characteristics, and a device (550) for controlling the variable reception filter (520), the method being **characterized by** the steps of :
- arranging the filters (520,520') between the transmitting antenna and the transmitter and the receiving antenna and the receiver, respectively,
- making each of said devices (550,550') for controlling the respective transmission and reception filters responsive to control signals from an external source, wherein the external source for control signals for the device for controlling the variable transmission filter (520') is the device (550) for controlling the variable reception filter (520) and vice versa, whereby the two control devices are in communication with each other,
whereby the frequency range at which the respective device and thereby the whole system (500) operates can be controlled during operation.

6. A method (500) according to claim 5, in which the external source whose control signals the device for controlling the variable filter (520',520) in the transmitting device and in the receiving device are responsive to is a central control device.

## Patentansprüche

1. System (500) zur Funkkommunikation im Mikrowellenbereich mit einem Übertragungsgerät und einem Empfangsgerät,
wobei das Übertragungsgerät einen Sender (530), eine Sendeantenne (510'), einen Sendefilter (520') mit variablen Filtereigenschaften und ein Gerät (550') zum Steuern des variablen Sendefilters (520) umfasst und das Empfangsgerät einen Empfänger (540), eine Empfangsantenne (510), einen Empfangsfilter (520) mit variablen Filtereigenschaften und ein Gerät (550) zum Steuern des variablen Empfangsfilters (520) umfasst,
wobei das System **dadurch gekennzeichnet ist, dass**
- der Sende- und Empfangsfilter (520, 520') jeweils zwischen der Sendeantenne und dem Sender und der Empfangsantenne und dem Empfänger angeordnet sind,
- wobei jedes der Geräte (550, 550') zum Steuern des jeweiligen Sende- und Empfangsfilters auf Steuersignale von einer externen Quelle reagiert,
wobei die externe Quelle für Steuersignale für das Gerät zum Steuern des variablen Sendefilters (520') das Gerät (550) zum Steuern des variablen Empfangsfilters (520) ist und umgekehrt, wobei die zwei Steuergeräte in Kommunikation miteinander sind,
wobei der Frequenzbereich, bei dem das jeweilige Gerät und **dadurch** das gesamte System (500) arbeiten, während einem Betrieb gesteuert werden kann.

2. System nach Anspruch 1, in dem die externe Quelle für Steuersignale für das Gerät zum Steuern des variablen Filters (520', 520) in dem Sendegerät und in dem Empfangsgerät ein zentrales Steuergerät ist.

3. System nach einem der Ansprüche 1 oder 2, in dem die variablen Filter (520', 520) in dem Sendegerät und in dem Empfangsgerät Bandpassfilter sind.

4. System nach einem der Ansprüche 1 oder 2, in dem die variablen Filter (520', 520) in dem Sendegerät und in dem Empfangsgerät Sperrfilter sind.

5. Verfahren zur Verwendung in einem System (500) zur Funkkommunikation im Mikrowellenbereich, wobei das System (500) ein Übertragungsgerät und ein Empfangsgerät aufweist, wobei das Übertragungsgerät einen Sender (530), eine Sendeantenne (510'), einen Sendefilter (520') mit variablen Filtereigenschaften und ein Gerät (550') zum Steuern des variablen Sendefilters (520) umfasst und das Empfangsgerät einen Empfänger (540), eine Empfangsantenne (510), einen Empfangsfilter (520) mit variablen Filtereigenschaften und ein Gerät (550) zum Steuern des variablen Empfangsfilters (520) umfasst,
wobei durch die Schritte **gekennzeichnet** ist:
- Anordnen der Sende- und Empfangsfilter (520, 520') jeweils zwischen der Sendeantenne und dem Sender und der Empfangsantenne und dem Empfänger,
- Reagieren lassen jedes der Geräte (550, 550') zum Steuern des jeweiligen Sende- und Empfangsfilters auf Steuersignale von einer externen Quelle, wobei die externe Quelle für Steuersignale für das Gerät zum Steuern des variablen Sendefilters (520') das Gerät (550) zum Steuern des variablen
Empfangsfilters (520) ist und umgekehrt, wobei die zwei Steuergeräte in Kommunikation miteinander sind,
wobei der Frequenzbereich, bei dem das jeweilige Gerät und **dadurch** das gesamte System (500) arbeiten, während einem Betrieb gesteuert werden kann.

6. Verfahren (500) nach Anspruch 5, in dem die externe Quelle, auf deren Steuersignale das Gerät zum Steuern des variablen Filters (520', 520) in dem Sendegerät und in dem Empfangsgerät reagiert, ein zentrales Steuergerät ist.

## Revendications

1. Système (500) de radiocommunication sur la plage des micro-ondes, comprenant un dispositif d'émission et un dispositif de réception, ledit dispositif d'émission comprenant un émetteur (530), une antenne d'émission (510'), un filtre d'émission (520') à caractéristiques de filtrage variables et un dispositif (550') de commande du filtre d'émission variable (520'), et ledit dispositif de réception comprenant un récepteur (540), une antenne de réception (510), un filtre de réception (520) à caractéristiques de filtrage variables et un dispositif (550) de commande du filtre de réception variable (520), le système étant **caractérisé en ce que**
- les filtres d'émission et de réception (520, 520') sont disposés entre l'antenne d'émission et l'émetteur et entre l'antenne de réception et le récepteur, respectivement ;
- chacun desdits dispositifs (550, 550') de commande des filtres d'émission et de réception respectifs répond à des signaux de commande d'une source extérieure, la source extérieure de signaux de commande pour le dispositif de commande du filtre d'émission variable (520') étant le dispositif (550) de commande du filtre de réception variable (520) et vice-versa, si bien que les deux dispositifs de commande sont en communication l'un avec l'autre,
si bien que la plage de fréquences où fonctionnent les dispositifs respectifs et donc le système complet (500), peut être commandée en service.

2. Système (500) selon la revendication 1, dans lequel la source extérieure de signaux de commande du dispositif de commande du filtre variable (520', 520) du dispositif d'émission et du dispositif de réception est un dispositif de commande central.

3. Système (500) selon l'une quelconque des revendications 1 et 2, dans lequel les filtres variables (520', 520) du dispositif d'émission et du dispositif de réception sont des filtres passe-bande.

4. Système (500) selon l'une quelconque des revendications 1 et 2, dans lequel les filtres variables (520', 520) du dispositif d'émission et du dispositif de réception sont des filtres à encoche.

5. Procédé à utiliser dans un système (500) de radiocommunication sur la plage des micro-ondes, le système comprenant un dispositif d'émission et un dispositif de réception, ledit dispositif d'émission comprenant un émetteur (530), une antenne d'émission (510'), un filtre d'émission (520') à caractéristiques de filtrage variables et un dispositif (550') de commande du filtre d'émission variable (520'), et ledit dispositif de réception comprenant un récepteur (540), une antenne de réception (510), un filtre de réception (520) à caractéristiques de filtrage variables et un dispositif (550) de commande du filtre de réception variable (520), le procédé étant **caractérisé par** les étapes consistant à :
- disposer les filtres (520, 520') entre l'antenne d'émission et l'émetteur et entre l'antenne de réception et le récepteur, respectivement ;
- faire répondre chacun desdits dispositifs (550, 550') de commande des filtres d'émission et de réception respectifs à des signaux de commande d'une source extérieure, la source extérieure de signaux de commande pour le dispositif de commande du filtre d'émission variable (520') étant le dispositif (550) de commande du filtre de réception variable (520) et vice-versa, si bien que les deux dispositifs de commande sont en communication l'un avec l'autre,
si bien que la plage de fréquences où fonctionnent les dispositifs respectifs et donc le système complet (500), peut être commandée en service.

6. Procédé (500) selon la revendication 5, dans lequel la source extérieure des signaux de commande auxquels répondent les dispositifs de commande du filtre variable (520', 520) du dispositif d'émission et du dispositif de réception, est un dispositif de commande central.
